# EUROPÄISCHE PATENTSCHRIFT

(11) **EP 2 054 262 B1**
(45) Veröffentlichungstag und Bekanntmachung des Hinweises auf die Patenterteilung: **06.01.2016**
(21) Anmeldenummer: 08707313.6
(22) Anmeldetag: 26.01.2008
(51) Int. Cl.: B60N 2/225, B60N 2/235, B60N 2/68, B23K 26/24, B23K 26/26

(54) **BESCHLAG FÜR EINEN FAHRZEUGSITZ**
FITTING FOR A VEHICLE SEAT
FERRURE POUR UN SIÈGE DE VÉHICULE

(30) Priorität: 21.02.2007 DE 102007009172
(43) Veröffentlichungstag der Anmeldung: 06.05.2009
(73) Patentinhaber: Johnson Controls Components GmbH & Co. KG, 67657 Kaiserslautern (DE)
(72) Erfinder: HILLE, Gunther, 42897 Remscheid (DE); ASSMANN, Uwe, 42857 Remscheid (DE)
(74) Vertreter: Loock, Jan Pieter
(86) Internationale Anmeldenummer: PCT/EP2008/000607
(87) Internationale Veröffentlichungsnummer: WO 2008/101584

(56) Entgegenhaltungen:
- DE-A1- 10 105 282
- DE-C1- 10 129 430
- DE-C1- 19 961 696
- DE-U1-202006 011 876
- JP-A- 7 016 776
- US-B1- 6 261 701

## Beschreibung

Die Erfindung betrifft einen Beschlag für einen Fahrzeugsitz, insbesondere Kraftfahrzeugsitz, mit den Merkmalen des Oberbegriffs des Anspruches 1.

Bei einem aus der DE 101 05 282 A1 bekannten Beschlag dieser Art sind das erste Beschlagteil, der Ring und der Adapter mittels einer gemeinsamen Schweißnaht miteinander verbunden. Die Schweißnaht wird beispielsweise durch einen Laserstrahl erzeugt, welcher in axialer Richtung senkrecht zur Verbindungsfläche ausgerichtet ist und auf den hinter dem Adapter gelegenen Stoß zwischen erstem Beschlagteil und Ring zielt. Entsprechend durchdringt die Schweißnaht den Adapter und verläuft dann zwischen erstem Beschlagteil und Ring.

Ein weiterer Beschlag mit einer Laserverschweißung ist aus der DE 199 61 696 C1 bekannt.

Der Erfindung liegt die Aufgabe zu Grunde, einen Beschlag der eingangs genannten Art weiter zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Verbindungsfläche wird durch die Anlage des Adapters am ersten Beschlagteil definiert, d.h. der Kontakt zwischen dem Adapter und dem ersten Beschlagteil findet innerhalb der Verbindungsfläche statt. Dadurch, dass die Schweißnaht aus einer Richtung erzeugt ist, die in einem flachen Winkel zur Verbindungsfläche verläuft, wird eine Durchschweißung des Adapters und damit ein Aufschmelzen von Material, welches keinen Anteil an der Belastungsfähigkeit der Konstruktion hat, vermieden. Die für die Lastaufnahme relevante Abmessung in der Verbindungsfläche ist dann nicht die Nahtbreite, sondern die Nahttiefe der Schweißnaht, welche vorzugsweise wesentlich größer ist als die Nahtbreite. Eine Anpassung dieser Abmessung in der Verbindungsfläche an die zu erwartenden Belastungen kann beispielsweise - bei unveränderter Laserschweißanlage - durch die Schweißgeschwindigkeit in Umfangsrichtung erfolgen, welche die Verweildauer an einer bestimmten Stelle bestimmt. Unter einem flachen Winkel sollen Winkel mit betragsmäßig bis zu 25°, also zwischen 0° und 25°, verstanden werden. Die Schweißnaht wird dabei nicht aus einer Richtung innerhalb der Verbindungsfläche erzeugt, wobei der Winkel 0° beträgt.

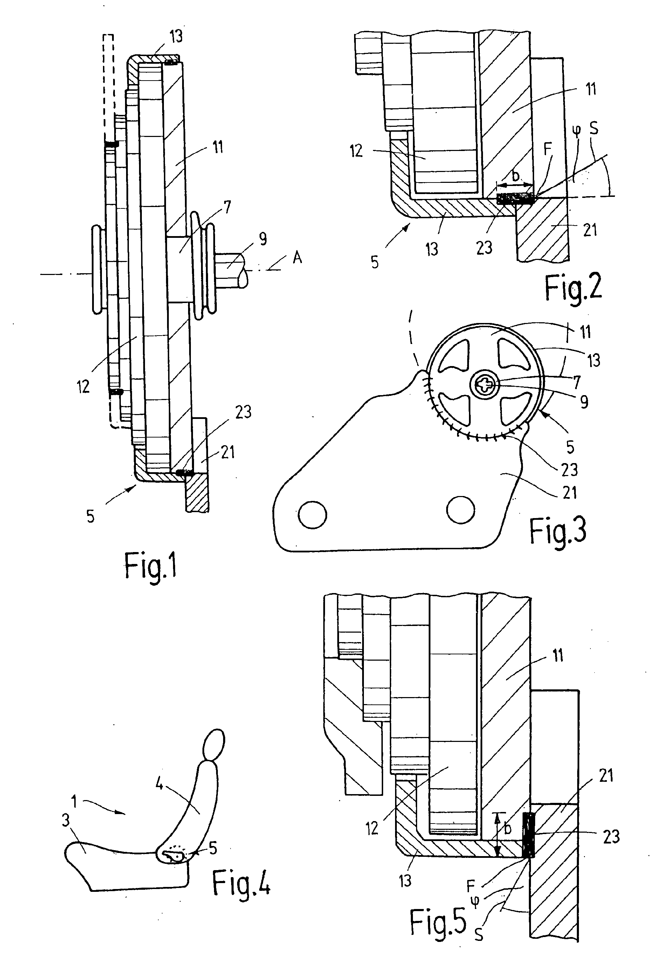

Im folgenden ist die Erfindung anhand zweier in der Zeichnung dargestellter Ausführungsbeispiele näher erläutert. Es zeigen
Fig. 1 eine teilweise geschnitten dargestellte Seitenansicht des Ausführungsbeispiels der Erfindung,
Fig. 2 eine vergrößerte Teilansicht von Fig. 1,
Fig. 3 eine gegenüber Fig. 1 um 90° versetzte Seitenansicht,
Fig. 4 eine schematische Darstellung eines Fahrzeugsitzes, und
Fig. 5 eine teilweise geschnitten dargestellte Teilansicht eines nicht zur Erfindung gehörenden Ausführungsbeispiels.

Ein Fahrzeugsitz 1 für ein Kraftfahrzeug weist ein Sitzteil 3 und eine Lehne 4 auf, welche auf beiden Fahrzeugsitzseiten mittels je eines Beschlags 5 relativ zum Sitzteil 3 um eine Achse A schwenkbar angebracht ist. Jeder Beschlag 5 umfasst einen zentralen, drehbaren Mitnehmer 7, wobei die beiden Mitnehmer 7 der beiden Beschläge 5 mittels einer profilierten Welle 9 miteinander in Wirkverbindung stehen. Die auf der Achse A angeordnete Welle 9 ist manuell mittels eines Handrades oder Hebels oder motorisch um die Achse A drehbar, wodurch jeweils eine Drehung der Mitnehmer 7 erfolgt. Die nachfolgend verwendeten Richtungsangaben beziehen sich auf das Zylinderkoordinatensystem, welches durch die horizontal und quer zur Fahrtrichtung angeordnete Welle 9 bzw. deren Achse A definiert ist.

Jeder Beschlag 5 umfasst ferner ein erstes Beschlagteil 11 und ein relativ zum ersten Beschlagteil 11 drehbares zweites Beschlagteil 12. Der Beschlag 5 kann als Rastbeschlag ausgebildet sein, wobei dann die beiden Beschlagteile 11 und 12 miteinander verriegelt sind und eine Drehung des Mitnehmers 7 den Beschlag 5 entriegelt. Der Beschlag 5 kann alternativ als Getriebebeschlag ausgebildet sein, wobei dann die beiden Beschlagteile 11 und 12 durch ein Getriebe zum Verstellen und Feststellen miteinander verbunden sind und eine Drehung des Mitnehmers 7 den Beschlag 5 antreibt, beispielsweise eine relative Abwälzbewegung der beiden Beschlagteile 11 und 12 bewirkt.

Beide Beschlagteile 11 und 12 weisen eine scheibenförmige Grundform mit einer zylindrischen Außenmantelfläche auf. Ein Ring 13 ist vorliegend in axialer Richtung auf das erste Beschlagteil 11 aufgepresst oder aufgeschrumpft, also fest mit diesem verbunden. Der Ring 13 übergreift das zweite Beschlagteil 12 mittels eines radial nach innen weisenden Randbereichs. Der Ring 13 umklammert also die beiden Beschlagteile 11 und 12 und hält die beiden in axialer Richtung zusammen. Damit sind die beiden Beschlagteile 11 und 12 in axialer Richtung gesichert, zumindest für einen Transport vor der Montage des Fahrzeugsitzes 1 im Kraftfahrzeug. Insgesamt bildet der Beschlag 5 dadurch in baulicher Hinsicht eine scheibenförmige Einheit.

Die Anbringung des Beschlags 5 am Sitzteil 3 erfolgt mittels eines Adapters 21. Der Adapter 21 ist vorliegend gabelförmig ausgebildet und weist eine Aufnahme auf. Der Adapter 21 wird am ersten Beschlagteil 11 und zugleich am Ring 13 angesetzt. Die durch den Kontakt zwischen erstem Beschlagteil 11 und Adapter 21 definierte, ins Unendliche verlängerte Verbindungsfläche ist mit F bezeichnet. Mittels einer Schweißnaht 23 werden der Adapter 21, das erste Beschlagteil 11 und der Ring fest miteinander verbunden, wodurch der Beschlag 5 in axialer Richtung auch gegen Crashkräfte gesichert ist. Die Schweißnaht 23 kann beispielsweise durch Laserschweißen, Elektronenstrahlschweißen oder Wolfram-Inertgas-Schweißen erzeugt werden. Die Schweißnaht 23 läuft zumindest näherungsweise in Umfangsrichtung um die Achse A herum und verbindet in dem Umfangsbereich, in welchem der Adapter 21 vorhanden ist, alle drei Bauteile miteinander, wobei die Schweißnaht 23 gegebenenfalls unterbrochen sein kann. Die Schweißnaht 23 kann in abgewandelter Ausführung um eine Kreislinie pendeln und dabei durchgängig oder unterbrochen ausgebildet sein, so dass allenfalls stellenweise die drei Bauteile miteinander verbunden sind, in der Regel aber nur zwei.

In einer Ausführung der Erfindung entspricht der (Innen-)Durchmesser der Aufnahme 21a des Adapters 21 dem Außen-Durchmesser des ersten Beschlagteils 11. Der Adapter 21 kann daher mit seiner Aufnahme auf das erste Beschlagteil 11 aufgeschoben werden, bis er in Anlage an die Stirnfläche des Rings 13 gelangt. Die Verbindungsfläche F ist daher eine Zylindermantelfläche und verläuft in Umfangsrichtung und in axialer Richtung. Die Schweißnaht 23 wird aus einer Richtung S erzeugt, die in einem flachen Winkel cp von bis zu ± 25° dazu verläuft. Der Laserstrahl, Elektronenstrahl oder allgemein das Schweißgerät zielt also in axialer Richtung in einem flachen Winkel von bis zu ± 25° auf den Stoß zwischen Adapter 21 und erstem Beschlagteil 11.

Die Schweißnaht 23 verläuft innerhalb der Verbindungsfläche F weiter in den Stoß zwischen Ring 13 und erstem Beschlagteil 11, wobei sie bei ihrer Erzeugung in diesem Bereich quasi hineingezogen wird, auch wenn die Richtung S des erzeugenden Strahls in einem flachen Winkel zur Verbindungsebene F steht. In dem Umfangsbereich, in welchem der Adapter 21 nicht vorhanden ist, verbindet die Schweißnaht 23 nur das erste Beschlagteil 11 mit dem Ring 13.

In einer nicht zur Erfindung gehörenden Ausführung ist der (Innen-)Durchmesser der Aufnahme des Adapters 21 kleiner als der Außen-Durchmesser des ersten Beschlagteils 11. Der Adapter 21 kann daher in axialer Richtung seitlich am ersten Beschlagteil 11 angesetzt werden. Die Verbindungsfläche F ist daher eine Ebene und verläuft in radialer Richtung und in Umfangsrichtung. Vorzugsweise ist der Ring 13 in axialer Richtung so bemessen, dass er ebenfalls bis zur Verbindungsfläche F reicht. Die Schweißnaht 23 wird aus einer Richtung S erzeugt, die innerhalb der Verbindungsfläche F oder in einem flachen Winkel ϕ von bis zu ± 25° dazu verläuft. Der Laserstrahl, Elektronenstrahl oder allgemein das Schweißgerät zielt also in radialer Richtung ± 25° auf den Stoß zwischen Adapter 21 und erstem Beschlagteil 11 und vorzugsweise zugleich auf den dahinter gelagerten Stoß zwischen Adapter 21 und Ring 13. Die Schweißnaht 23 verläuft also - aus den gleichen Gründen wie in der Ausführung der Erfindung - innerhalb der Verbindungsfläche F.

Die für die Lastaufnahme relevante, tragende Abmessung b der Schweißnaht 23 ist die von der Umfangsrichtung verschiedene Abmessung innerhalb der Verbindungsfläche F, und wird also in der Regel senkrecht zur Umfangsrichtung gemessen. In beiden Ausführungsbeispielen ist die Abmessung b der Schweißnaht 23 in der Verbindungsfläche F, d.h. vorliegend die Nahttiefe, deutlich größer als die senkrecht dazu verlaufende, von der Umfangsrichtung verschiedene Abmessung, d.h. vorliegend die Nahtbreite. Die Lastaufnahme ist dadurch optimiert. Zugleich ist die aufzuschmelzende Materialmenge so klein wie möglich. Die Abmessung b der Schweißnaht 23 in der Verbindungsfläche F ist unabhängig von der verwendeten Strahlquelle und der Optik oder dergleichen und kann bei sonst gleichen Anlagenparametern durch Variation der Schweißgeschwindigkeit den konstruktiven Notwendigkeiten angepasst werden.

Das zweite Beschlagteil 12 ist mit der Struktur der Lehne 4 verbunden, vorzugsweise verschweißt.

### Bezugszeichenliste

- 1: Fahrzeugsitz
- 3: Sitzteil
- 4: Lehne
- 5: Beschlag
- 7: Mitnehmer
- 9: Welle
- 11: erstes Beschlagteil
- 12: zweites Beschlagteil
- 13: Ring
- 21: Adapter
- 23: Schweißnaht
- A: Achse
- F: Verbindungsfläche
- S: Richtung des erzeugenden Strahls
- b: Abmessung der Schweißnaht 23 in der Verbindungsflächen F
- *ϕ*: Winkel der Richtung S zur Verbindungsfläche F

## Patentansprüche

1. Beschlag für einen Fahrzeugsitz, insbesondere für einen Kraftfahrzeugsitz, mit einem ersten Beschlagteil (11), mit einem relativ zum ersten Beschlagteil (11) um eine Achse (A) verdrehbaren zweiten Beschlagteil (12), und einem die beiden Beschlagteile (11, 12) in axialer Richtung zusammenhaltenden Ring (13), wodurch der Beschlag (5) eine scheibenförmige Einheit bildet, wobei ein Adapter (21) vorgesehen ist, welcher am ersten Beschlagteil (11), insbesondere auf Stoß, anliegt und durch die Anlage eine Verbindungsfläche (F) definiert und welcher mittels einer Schweißnaht (23) mit dem ersten Beschlagteil (11) und/oder dem Ring (13) verbunden ist, **dadurch gekennzeichnet, dass** die Schweißnaht (23) aus einer Richtung (S) erzeugt ist, die in einem flachen Winkel (ϕ) zur Verbindungsfläche (F) verläuft, wobei die Verbindungsfläche (F) bezüglich der Achse (A) einerseits in Umfangsrichtung und andererseits in axialer Richtung verläuft, und wobei der Adapter (21) eine Aufnahme als Verbindungsfläche aufweist, deren Durchmesser dem Außen-Durchmesser des ersten Beschlagteils (11) entspricht.

2. Beschlag nach Anspruch 1, **dadurch gekennzeichnet, dass** die Abmessung (b) der Schweißnaht (23) in der Verbindungsfläche (F) größer ist als die senkrecht dazu verlaufende, von der Umfangsrichtung verschiedene Abmessung der Schweißnaht (23).

3. Beschlag nach einem der vorhergehenden Ansprüche, **dadurch gekennzeichnet, dass** das erste Beschlagteil (11), der Ring (13) und der Adapter (21) gemeinsam mittels der Schweißnaht (23) miteinander verbunden sind.

4. Beschlag nach einem der vorhergehenden Ansprüche, **dadurch gekennzeichnet, dass** die Schweißnaht (23) durch einen Laserstrahl oder Elektronenstrahl erzeugt ist, welcher aus der Richtung (S) in dem flachen Winkel (ϕ) zur Verbindungsfläche (F) auf den Stoß zwischen Adapter (21) und erstem Beschlagteil (11) zielt.

5. Beschlag nach einem der vorhergehenden Ansprüche, **dadurch gekennzeichnet, dass** der flache Winkel (ϕ) bis zu ± 25° zur Verbindungsfläche (F) beträgt.

6. Beschlag nach einem der vorhergehenden Ansprüche, **dadurch gekennzeichnet, dass** der Ring (13) auf das erste Beschlagteil (11) gepresst ist.

7. Beschlag nach einem der vorhergehenden Ansprüche, **dadurch gekennzeichnet, dass** der Ring (13) das zweite Beschlagteil (12) übergreift.

8. Beschlag nach einem der vorhergehenden Ansprüche, **dadurch gekennzeichnet, dass** der fest mit dem ersten Beschlagteil (11) verbundene Adapter (21) zur Befestigung des Beschlags (5) an der Struktur eines Sitzteils (3) des Fahrzeugsitzes (1) dient und/oder dass das zweite Beschlagteil (12) zur Befestigung des Beschlags (5) an der Struktur einer Lehne (4) des Fahrzeugsitzes (1) dient.

9. Fahrzeugsitz (1) mit einem Sitzteil (3) und einer relativ zu diesem um die Achse (A) schwenkbare Lehne (4), **gekennzeichnet durch** wenigstens einen Beschlag (5) nach einem der vorhergehenden Ansprüche zum Schwenken der Lehne (4).

## Claims

1. Fitting for a vehicle seat, in particular for a motor vehicle seat, with a first fitting part (11), with a second fitting part (12) which is rotatable relative to the first fitting part (11) about an axis (A), and with a ring (13) holding the two fitting parts (11, 12) together in the axial direction, as a result of which the fitting (5) forms a disc-shaped unit, wherein an adapter (21) which bears against the first fitting part (11), in particular in abutment, is provided and, by means of the contact, defines a connecting surface (F) and which is connected to the first fitting part (11) and/or to the ring (13) by means of a weld seam (23), **characterized in that** the weld seam (23) is produced from a direction (S) which runs at a shallow angle (ϕ) to the connecting surface (F), wherein the connecting surface (F) runs with respect to the axis (A) in the circumferential direction and in the axial direction, and wherein the adapter (21) has a receptacle as connecting surface, the diameter of which corresponds to the outside diameter of the first fitting part (11).

2. Fitting according to Claim 1, **characterized in that** the size (b) of the weld seam (23) in the connecting surface (F) is larger than the size of the weld seam (23) running perpendicularly thereto and differing from the circumferential direction.

3. Fitting according to either of the preceding claims, **characterized in that** the first fitting part (11), the ring (13) and the adapter (21) are jointly connected to one another by means of the weld seam (23).

4. Fitting according to one of the preceding claims, **characterized in that** the weld seam (23) is produced by a laser beam or electron beam which aims at the butt joint between adapter (21) and first fitting part (11) from the direction (S) in the shallow angle (ϕ) to the connecting surface (F).

5. Fitting according to one of the preceding claims, **characterized in that** the shallow angle (ϕ) is up to ±25° to the connecting surface (F).

6. Fitting according to one of the preceding claims, **characterized in that** the ring (13) is pressed onto the first fitting part (11).

7. Fitting according to one of the preceding claims, **characterized in that** the ring (13) engages over the second fitting part (12).

8. Fitting according to one of the preceding claims, **characterized in that** the adapter (21) connected fixedly to the first fitting part (11) serves for fastening the fitting (5) to the structure of a seat part (3) of the vehicle seat (1), and/or **in that** the second fitting part (12) serves for fastening the fitting (5) to the structure of a backrest (4) of the vehicle seat (1).

9. Vehicle seat (1) with a seat part (3) and a backrest (4) which is pivotable relative thereto about the axis (A), **characterized by** at least one fitting (5) according to one of the preceding claims for pivoting the backrest (4).

## Revendications

1. Ferrure pour un siège de véhicule, en particulier pour un siège de véhicule automobile, comprenant une première partie de ferrure (11), une deuxième partie de ferrure (12) pouvant tourner par rapport à la première partie de ferrure (11) autour d'un axe (A), et une bague (13) retenant ensemble les deux parties de ferrure (11, 12) dans la direction axiale, de sorte que la ferrure (5) forme une unité en forme de disque, un adaptateur (21) étant prévu, lequel s'applique contre la première partie de ferrure (11), en particulier en aboutement, et définit par son application une surface de liaison (F), et lequel est connecté au moyen d'un joint de soudure (23) à la première partie de ferrure (11) et/ou à la bague (13), **caractérisée en ce que** le joint de soudure (23) est produit à partir d'une direction (S) qui s'étend suivant un angle plat (ϕ) par rapport à la surface de liaison (F), la surface de liaison (F) s'étendant par rapport à l'axe (A) d'une part dans la direction périphérique et d'autre part dans la direction axiale, et l'adaptateur (21) présentant un logement en tant que surface de liaison, dont le diamètre correspond au diamètre extérieur de la première partie de ferrure (11).

2. Ferrure selon la revendication 1, **caractérisée en ce que** la dimension (b) du joint de soudure (23) dans la surface de liaison (F) est plus grande que la dimension du joint de soudure (23) différente de la direction périphérique, s'étendant perpendiculairement à celle-ci.

3. Ferrure selon l'une quelconque des revendications précédentes, **caractérisée en ce que** la première partie de ferrure (11), la bague (13) et l'adaptateur (21) sont connectés ensemble les uns avec les autres au moyen du joint de soudure (23).

4. Ferrure selon l'une quelconque des revendications précédentes, **caractérisée en ce que** le joint de soudure (23) est produit par un faisceau laser ou un faisceau d'électrons qui s'oriente à partir de la direction (S) suivant l'angle plat (ϕ) par rapport à la surface de liaison (F) vers l'aboutement entre l'adaptateur (21) et la première partie de ferrure (11).

5. Ferrure selon l'une quelconque des revendications précédentes, **caractérisée en ce que** l'angle plat (ϕ) vaut jusqu'à ± 25° par rapport à la surface de liaison (F).

6. Ferrure selon l'une quelconque des revendications précédentes, **caractérisée en ce que** la bague (13) est pressée sur la première partie de ferrure (11).

7. Ferrure selon l'une quelconque des revendications précédentes, **caractérisée en ce que** la bague (13) vient en prise par le dessus avec la deuxième partie de ferrure (12).

8. Ferrure selon l'une quelconque des revendications précédentes, **caractérisée en ce que** l'adaptateur (21) connecté fixement à la première partie de ferrure (11) sert à la fixation de la ferrure (5) sur la structure d'une partie de siège (3) du siège de véhicule (1) et/ou **en ce que** la deuxième partie de ferrure (12) sert à la fixation de la ferrure (5) sur la structure d'un dossier (4) du siège de véhicule (1).

9. Siège de véhicule (1) comprenant une partie de siège (3) et un dossier (4) pouvant pivoter par rapport à celui-ci autour de l'axe (A), **caractérisé par** au moins une ferrure (5) selon l'une quelconque des revendications précédentes pour faire pivoter le dossier (4).
